# EUROPEAN PATENT APPLICATION

(11) **EP 3 330 164 A1**
(43) Date of publication of application: **06.06.2018**
(21) Application number: 16832596.7
(22) Date of filing: 02.06.2016
(51) Int. Cl.: B62J 99/00, B60W 40/112

(54) **BANKING ANGLE DETECTION DEVICE AND BANKING ANGLE DETECTION METHOD**

(30) Priority: 31.07.2015 JP 2015152963
(71) Applicant: KYB Corporation, Tokyo 105-6111 (JP)
(72) Inventor: AWANO, Koichiro, Tokyo 105-6111 (JP)
(74) Representative: MFG Patentanwälte Meyer-Wildhagen Meggle-Freund Gerhard PartG mbB
(86) International application number: PCT/JP2016/066378
(87) International publication number: WO 2017/022317

(57) **Abstract**

An object of the present invention is to provide an apparatus and a method for determining a bank angle that accurately determine a bank angle of the body of a vehicle.

To achieve the above object, in the apparatus and the method for determining a bank angle according to the present invention, the larger bank angle is selected from a bank angle calculated based on accelerations of the body in the vertical and lateral directions and a bank angle calculated based on angular velocities of the body in the pitch and yaw directions to determine a bank angle of the body.

## Description

### Technical Field

The present invention relates to an apparatus and a method for determining a bank angle.

### Background Art

A bank angle of the body of a vehicle (an inclination angle of the body in the lateral direction) indicates the degree of rolling of the body and is useful for restricting the vibration of the body. In the case of a two-wheeled vehicle, the bank angle can be used for determining the possibility of the body falling down and enabling the rider of the vehicle to prevent the falls as well as for restricting the vibration of the body.

As described above, the information on a bank angle of the body of a vehicle is useful for controlling the vehicle. For example, JP 2002-140800 A discloses a conventional apparatus for determining a bank angle based on a velocity of a vehicle and the radius of a curved road (See Patent Literature 1). There is another conventional apparatus for determining a bank angle by detecting an angular velocity of the body of a vehicle in the bank direction (a bank angular velocity of the body) with a gyro sensor and integrating the bank angular velocity.

### Summary of the Invention

The apparatus for determining a bank angle based on a velocity of a vehicle and the radius of a curved road may not accurately determine a bank angle because the center of gravity of the body of the vehicle with a rider is not stable.

As for the apparatus for determining a bank angle of the body of a vehicle with a gyro sensor, the noise due to the vibration of the engine will influence the signals of a bank angular velocity, which causes an error of the bank angular velocity. If a bank angler velocity is determined by integrating the inaccurate bank angular velocity, a resulting bank angle will deviate from the actual bank angle to become inaccurate.

The present invention has been made to solve the above problems, and an object of the present invention is to provide an apparatus and a method for determining a bank angle that accurately determine a bank angle of the body of a vehicle.

To achieve the above object, the apparatus for determining a bank angle selects the larger bank angle from a bank angle calculated based on accelerations of the body of a vehicle in the vertical and lateral directions and a bank angle calculated based on angular velocities of the body in the pitch and yaw directions to determine a bank angle of the body.

### Brief Description of Drawings

Fig. 1 is a view of the structure of an apparatus for determining a bank angle according to an embodiment of the present invention.
Fig. 2 is a view explaining the relationship between accelerations of the body of a vehicle in the vertical and lateral directions and a bank angle of the body.
Fig. 3 is a view explaining the relationship between angular velocities of the body of a vehicle in the pitch and yaw directions and a bank angle of the body.
Fig. 4 is a view illustrating a blind zone for a bank angle calculated by a second bank angle calculating section.
Fig. 5 is a flow chart illustrating an example procedure for determining a bank angle by an apparatus for determining a bank angle according to an embodiment of the present invention.

### Description of Embodiments

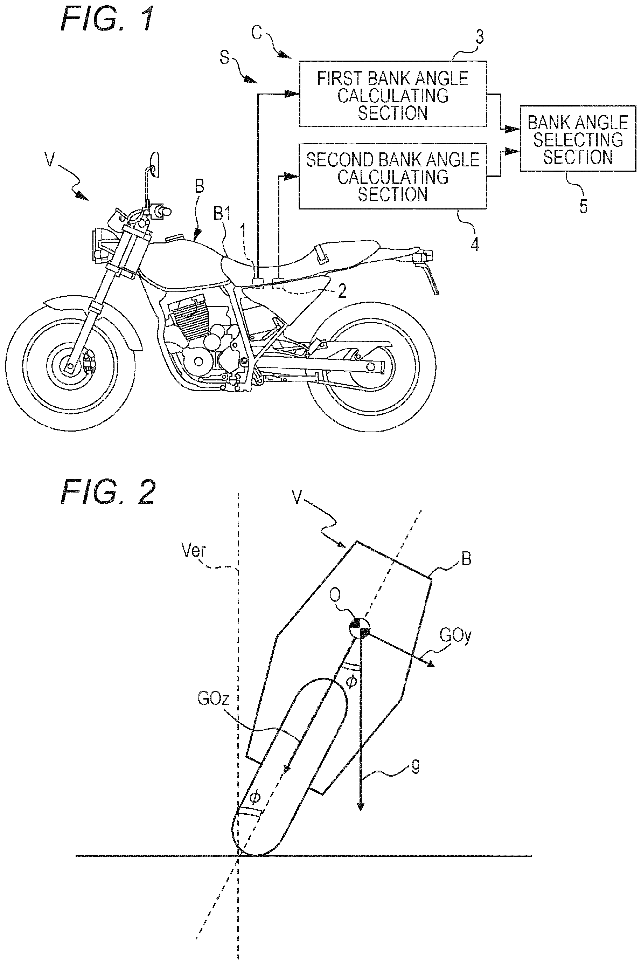

The present invention will now be described based on the embodiment shown in the accompanying drawings . As shown in Fig. 1, an apparatus S for determining a bank angle according to the embodiment includes: an accelerometer 1 for detecting an acceleration Gz of a body B of a vehicle V having a rider seat in the vertical direction (a vertical acceleration Gz of the body B) and an acceleration Gy of the body B in the lateral direction (a lateral acceleration Gy of the body B) ; and a gyro sensor 2 for detecting an angular velocity Rθ of the body B in the pitch direction (a pitch angular velocity Rθ of the body B) and an angular velocity Rψ of the body B in the yaw direction (a yaw angular velocity Rψ of the body B); and an arithmetic unit C having a first bank angle calculating section 3, a second bank angle calculating section 4, and a bank angle selecting section 5.

The individual components of the apparatus will now be described in detail. In this example, the vehicle V is a motorcycle having a rider seat. As shown in Fig. 1, the accelerometer 1 is disposed right under a rider seat B1 on the body B of the vehicle V for detecting the vertical acceleration Gz and the lateral acceleration Gy of the body B. The accelerometer 1 of this example may be a three-axis accelerometer that detects an acceleration of the body B in the longitudinal direction as well as the longitudinal acceleration Gz and the lateral acceleration Gy of the body B.

As shown in Fig. 1, the gyro sensor 2 is disposed right under the seat B1 on the body B, as in the accelerometer 1, for detecting the pitch angular velocity Rθ and the yaw angular velocity Rψ of the body B. The gyro sensor 2 of this example may be a three-axis gyro sensor that detects an angular velocity of the body B in the bank direction as well as the pitch angular velocity Rθ and the yaw angular velocity Rψ of the body B.

The arithmetic unit C is disposed under the seat B1 on the body B together with the accelerometer 1 and the gyro sensor 2. When the arithmetic unit C is disposed near the accelerometer 1 and the gyro sensor 2, the wiring can advantageously be short, however, the arithmetic unit C may be disposed at any place. The arithmetic unit C includes: a first bank angle calculating section 3 for calculating a bank angle ϕG of the body B based on the accelerations Gz and Gy; a second bank angle calculating section 4 for calculating a bank angle ϕJ of the body B based on the angular velocities Rθ and Rψ, and a bank angle selecting section 5 for selecting the larger bank angle from the bank angle ϕG and the bank angle ϕJ to determine a bank angle ϕe of the body B.

The first bank angle calculating section 3 calculates the bank angle ϕG based on the vertical acceleration Gz and the lateral acceleration Gy of the body B detected by the accelerometer 1. As shown in Fig. 2, when the body B is banked by a bank angle ϕ with respect to a vertical axis Ver with no centrifugal force, the resultant force of a vertical acceleration GOz and a lateral acceleration GOy of the body B on the center O of gravity of the body B corresponds to the gravitational acceleration g. If the accelerations Gz and Gy detected by the accelerometer 1 are considered to correspond to the accelerations GOz and GOy on the center O of gravity, respectively, the following expression holds: ϕ=tan⁻¹ (Gy/Gz). The first bank angle calculating section 3 calculates the bank angle ϕG based on the expression, ϕG=tan⁻¹(Gy/Gz). When the body B is not subjected to a large centrifugal force, the bank angle ϕG calculated by the first bank angle calculating section 3 is substantially close to the actual bank angle of the body B. When the vehicle V turns, the centrifugal force increases with the increase in the velocity Vv of the vehicle V, which decreases the lateral acceleration Gy detected by the accelerometer 1. Accordingly, as the velocity Vv of the vehicle V increases in a turn of the vehicle V, the bank angle ϕG calculated by the first bank angle calculating section 3 tends to be smaller than the actual bank angle.

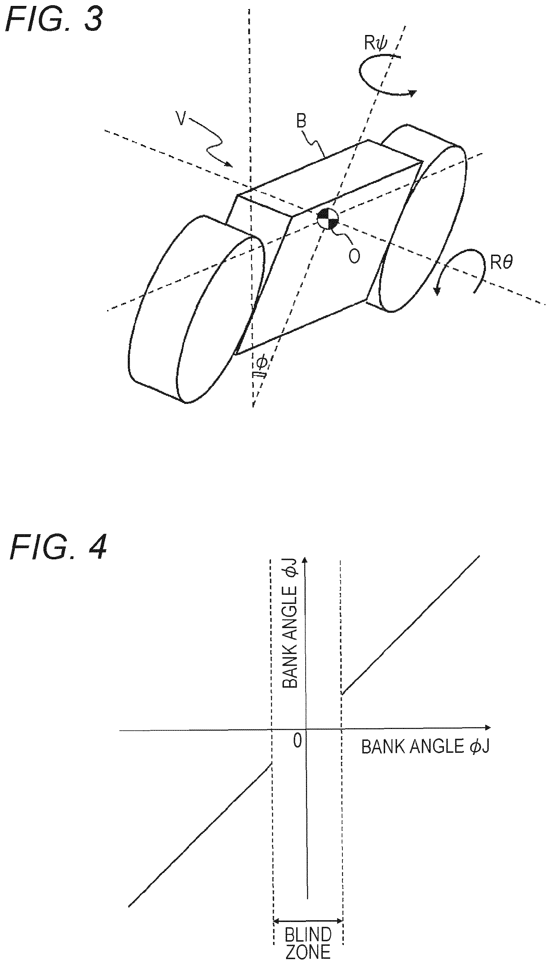

The second bank angle calculating section 4 calculates the bank angle ϕJ based on the pitch angular velocity Rθ and the yaw angular velocity Rψ of the body B detected by the gyro sensor 2. As shown in Fig. 3, when the body B is banked by the bank angle ϕ with respect to the vertical axis Ver, the relationship between the pitch angular velocity Rθ and the yaw angular velocity Rψ, and the bank angle ϕ can be expressed by the following expression: ϕ=sin⁻¹(Rθ/Rψ). The second bank angle calculating section 4 calculates the bank angle ϕJ based on the expression, ϕJ=sin⁻¹(Rθ/Rψ). The second bank angle calculating section 4 calculates the bank angle ϕJ based on the pitch angular velocity Rθ and the yaw angular velocity Rψ instead of integrating a bank angular velocity. Therefore, the second bank angle calculating section 4 can give the bank angle ϕJ that does not include an error arising from an integral drift. The bank angle ϕJ given by the second bank angle calculating section 4 is thus substantially close to the actual bank angle of the body B.

The bank angle selecting section 5 selects the larger bank angle from the bank angle ϕG calculated by the first bank angle calculating section 3 and the bank angle ϕJ calculated by the second bank angle calculating section 4 to finally determine the bank angle ϕe.

As described above, the first bank angle calculating section 3 calculates the bank angle ϕG based on the accelerations Gz and Gy detected by the accelerometer 1. When the vehicle V turns at a high velocity Vv and is subjected to a large centrifugal force, the bank angle ϕG tends to be smaller than the actual bank angle of the body B. When the body B is not subjected to a large centrifugal force, however, the bank angle ϕG calculated by the first bank angle calculating section 3 based on the data from the accelerometer 1 is substantially close to the actual bank angle. In other words, when the vehicle V runs at a low velocity or is at rest, the bank angle ϕG calculated based on the vertical acceleration Gz and the lateral acceleration Gy of the body B is substantially close to the actual bank angle of the body B.

On the other hand, the second bank angle calculating section 4 calculates the bank angle ϕJ based on the pitch angular velocity Rθ and the yaw angular velocity Rψ detected by the gyro sensor 2. Therefore, the second bank angle calculating section 4 can give the bank angle ϕJ that is substantially close to the actual bank angle with little deviation. When the body B is banked slowly, however, the gyro sensor 2 cannot accurately detect the pitch angular velocity Rθ and the yaw angular velocity Rψ. In this case, the bank angle ϕJ calculated by the second bank angle calculating section 4 tends to be smaller than the actual bank angle.

If the larger bank angle is selected as the bank angle ϕe from the bank angle ϕG calculated by the first bank angle calculating section 3 and the bank angle ϕJ calculated by the second bank angle calculating section ϕJ, the bank angle ϕe will substantially be close to the actual bank angle of the body B irrespective of the conditions of the vehicle V.

Since the gyro sensor 2 is mounted in the body B of the vehicle V, which is subjected to the vibration of the engine, the pitch angular velocity Rθ and the yaw angular velocity Rψ are influenced by the components of the engine's vibration. Under such conditions, when a calculated bank angle ϕJ is near 0 degree, the value tends to be incorrect. As shown in Fig. 4, a blind zone may be set in a range including 0 degree for a bank angle ϕJ calculated by the second bank angle calculating section 4. In this case, when the calculated bank angle ϕJ is in the blind zone, the second bank angle calculating section 4 gives 0 degree as the value of the bank angle ϕJ. In the range in which the bank angle ϕJ calculated based on the data from the gyro sensor 2 tends to be incorrect, the bank angle ϕG calculated based on the data from the accelerometer 1 tends to be selected. Accordingly, the bank angle ϕe closer to the actual bank angle of the body B is given. The blind zone may have any range, however, the blind zone should have a range in which a calculated bank angle ϕJ tends to be incorrect.

As described above, when the vehicle V runs at a low velocity Vv, the bank angle ϕG calculated by the first bank angle calculating section 3 tends to be substantially close to the actual bank angle of the body B. As described above, when the body B is banked slowly, the bank angle ϕJ calculated by the second bank angle calculating section 4 tends to be smaller than the actual bank angle. In this respect, a threshold Vα may be set for the velocity Vv. In this case, whenever the velocity Vv is equal to or lower than the threshold Vα, the bank angle selecting section 5 selects the bank angle ϕG calculated by the first bank angle calculating section 3 based on the data from the accelerometer 1. Accordingly, the bank angle ϕe closer to the actual bank angle of the body B is given. This method may be provided together with the above method using the blind zone for a bank angle ϕJ calculated by the second bank angle calculating section 4 in order to give 0 degree as the value of the bank angle ϕJ when the calculated bank angle ϕJ is in the blind zone.

The arithmetic unit C is a computer system having hardware resources including an amplifier for amplifying the signals from the accelerometer 1 and the gyro sensor 2, a converter for converting analog signals to digital signals, a central prossesing unit (CPU), a memory such as a read only memory (ROM), a random access memory (RAM), a crystal oscillator, and bus lines connecting these components, all of which are not shown. The programs for processing various signals to determine the bank angle ϕe may be prestored in the ROM or other memory.

Since the arithmetic unit C is a known computer system, the arithmetic unit C can be integrated with an electronic control unit (ECU) in the vehicle V if the vehicle V has the ECU.

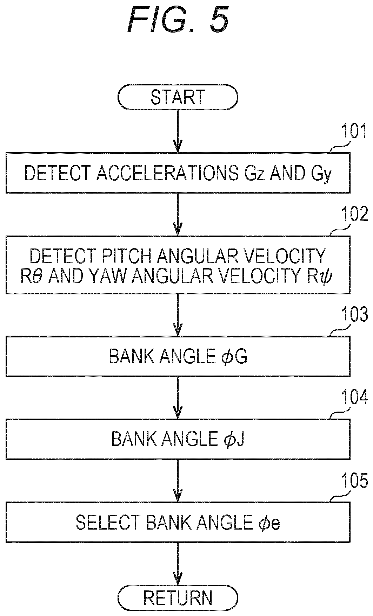

The procedures took by the first bank angle calculating sections 3, the second bank angle calculating section 4, and the bank angle selecting section 5 of the apparatus S for determining a bank angle will now be described with reference to the flow chart of Fig. 5. First, the apparatus S for determining a bank angle detects the accelerations Gz and Gy with the accelerometer 1 (Step 101). Step 101 is thus a step of detecting accelerations. The apparatus S for determining a bank angle then detects the pitch angular velocity Rθ and the yaw angular velocity Rψ with the gyro sensor 2 (Step 102). Step 102 is thus a step of detecting angular velocities. The apparatus S for determining a bank angle then reads the accelerations Gz and Gy and calculates the bank angle cpG (Step 103). Step 103 is thus a step of calculating a first bank angle. The apparatus S for determining a bank angle then reads the pitch angular velocity Rθ and the yaw angular velocity Rψ and calculates the bank angle ϕJ (Step 104). Step 104 is thus a step of calculating a second bank angle. Finally, the apparatus S for determining a bank angle selects the larger bank angle from the bank angle ϕG and the bank angle ϕJ to determine the bank angle ϕe of the body B (Step 105). Step 105 is thus a step of selecting a bank angle.

The apparatus S for determining a bank angle repeats Step 101 to Step 105 to continue to determine the bank angle ϕe of the body B. In this example, the method for determining a bank angle includes Step 101 to Step 105.

The determined bank angle ϕe may be used to control the damping force of a shock absorber in the vehicle V or be displayed on a monitor (not shown) for the rider of the vehicle V.

As described above, the apparatus S for determining a bank angle selects the larger bank angle from the bank angle ϕG calculated based on the vertical and lateral accelerations Gz and Gy of the body B and the bank angle ϕJ calculated based on the pitch and yaw angular velocities Rθ and Rψ of the body B to determine the bank angle ϕe. Accordingly, the apparatus S for determining a bank angle can give the bank angle ϕe substantially close to the actual bank angle of the body B irrespective of the conditions of the vehicle V. According to the apparatus S and the method for determining a bank angle, the bank angle of the body B of the vehicle V can accurately be determined.

In addition, the blind zone may be set in a certain range including 0 degree for a bank angle ϕJ calculated by the second bank angle calculating section 4. In this case, when the calculated bank angle ϕJ is in the blind zone, the second bank angle calculating section 4 may give 0 degree as the value of the bank angle ϕJ. In the range in which the bank angle ϕJ calculated based on the data from the gyro sensor 2 tends to be incorrect, the apparatus S for determining a bank angle tends to select the bank angle ϕG calculated based on the data from the accelerometer 1. Accordingly, the apparatus S for determining a bank angle can give the bank angle ϕe closer to the actual bank angle of the body B.

In addition, whenever the velocity Vv is equal to or lower than the threshold Vα, the bank angle ϕG calculated by the first bank angle calculating section 3 based on the data from the accelerometer 1 may be selected as the bank angle ϕe. Accordingly, the apparatus S can give the bank angle ϕe closer to the actual bank angle of the body B.

When the vehicle V has a rider seat and the accelerometer 1 and the gyro sensor 2 are disposed under the seat B1 on the body B, the accelerations Gz and Gy and the angular velocities Rθ and Rψ can be detected near the center of gravity of the body B of the vehicle V with a rider. Accordingly, the apparatus S can give the bank angle ϕe closer to the actual bank angle of the body B.

This application claims a priority on Japanese Patent Application No. 2015-152963 filed on July 31, 2015 and all of the contents thereof are incorporated herein by reference.

## Claims

1. An apparatus for determining a bank angle, comprising:
an accelerometer for detecting an acceleration of the body of a vehicle in the vertical direction and an acceleration of the body in the lateral direction;
a gyro sensor for detecting an angular velocity of the body in the pitch direction and an angular velocity of the body in the yaw direction;
a first bank angle calculating section for calculating a bank angle of the body based on the accelerations in the vertical and lateral directions detected by the accelerometer; and
a second bank angle calculating section for calculating a bank angle of the body based on the angular velocities in the pitch and yaw directions detected by the gyro sensor,
wherein the larger bank angle is selected from the bank angle calculated by the first bank angle calculating section and the bank angle calculated by the second bank angle calculating section to determine a bank angle of the body.

2. The apparatus for determining a bank angle according to claim 1,
wherein the second bank angle calculating section gives 0 degree as the value of a calculated bank angle when the calculated bank angle is in a blind zone set in a range including 0 degree.

3. The apparatus for determining a bank angle according to claim 1,
wherein the bank angle calculated by the first bank angle calculating section is selected as the bank angle of the body when the velocity of the vehicle is equal to or lower than a threshold.

4. The apparatus for determining a bank angle according to claim 1,
wherein the vehicle has a rider seat, and
the accelerometer and the gyro sensor are disposed under the seat on the body.

5. A method for determining a bank angle, comprising:
a step of detecting an acceleration of the body of a vehicle in the vertical direction and an acceleration of the body in the lateral direction;
a step of detecting an angular velocity of the body in the pitch direction and an angular velocity of the body in the yaw direction;
a step of calculating a first bank angle of the body based on the accelerations of the body in the vertical and lateral directions;
a step of calculating a second bank angle of the body based on the angular velocities of the body in the pitch and yaw directions; and
a step of selecting the larger bank angle from the first bank angle and the second bank angle to determine a bank angle of the body.
